# EUROPEAN PATENT SPECIFICATION

(11) **EP 1 669 625 B1**
(45) Date of publication and mention of the grant of the patent: **02.05.2012**
(21) Application number: 05027014.9
(22) Date of filing: 09.12.2005
(51) Int. Cl.: F16D 48/00

(54) **Gear change control device and gear change control method, and straddle-type vehicle**
Gangwechsel- Steuereinrichtung und Gangwechsel- Steuerverfahren, und Spreitzsitz-Fahrzeug
Dispostif et procédé de commande pour changement de vitesses de transmission, et véhicule à position à califourchon

(30) Priority: 10.12.2004 JP 2004359229
(43) Date of publication of application: 14.06.2006
(73) Proprietor: Yamaha Hatsudoki Kabushiki Kaisha, Iwata-shi, Shizuoka-ken (JP)
(72) Inventor: Zenno, Toru, Iwata-shi, Shizuoka-ken (JP)
(74) Representative: Grünecker, Kinkeldey, Stockmair & Schwanhäusser

(56) References cited:
- EP-A- 0 638 454
- WO-A-02/46636
- DE-A1-102005 014 505
- JP-A- 10 287 150

## Description

The present invention relates to a gear change control device to a gear change control method and additionally to a straddle-type vehicle.

Straddle-type vehicles having a clutch and a transmission driven by actuators such as motors are increasingly in practical use. When a rider of such a straddle-type vehicle inputs a gear change command manually, the clutch and the transmission in conjunction with each other perform a series of gear change operations automatically. Specifically, a clutch actuator automatically disengages the dutch, a shift actuator automatically shifts up or down the transmission, and then the clutch actuator automatically reengages the clutch (see JP-A-Hei 10-287150).

However, the conventional art described above is intended for gear change control for use while the vehicle is running and is difficult to apply to gear change control for use when the vehicle starts to run. That is, the vehicle speed is not increased enough when the vehicle starts to run and the rotational speed difference between the driving member (for example, a friction disk for a wet muiti-plate dutch) and the driven member (for example, a clutch disk for a wet multi-plate dutch) of the clutch is often larger than during running. Therefore, if applied as it is, the gear change control for use while the vehicle is running could not perform smooth gear changes and might spoil the riding comfort of the straddle-type vehicle.

WO 03/006842, considered to represent the closest prior art, discloses a method and a control device for controlling a transmission of a vehicle using a starting to run characteristic curve.

The present invention has been made in view of the foregoing problem, and therefore has an object to provide a gear change control device and method for a straddle-type vehicle such as straddle-type vehicles, and a straddle-type vehicle which can change transmission gears when the vehicle starts to run.

This objective is solved in an inventive manner by a gear change control device for a straddle-type vehicle according to claim 1, a starting-to-run control program configured to execute different clutch control strategies during a starting-to-run control of the vehicle.

According to a preferred embodiment, the gear change control device comprises starting-to-run control means for starting the straddle-type vehicle, which has been stopping with the clutch disengaged and the transmission in gear, to run by engaging the clutch under first control, and during-starting-to-run gear change control means for, if the determination means determines that a gear change command is given while the clutch is being engaged, once disengaging the clutch, causing the transmission to change gears according to the gear change command, and then reengaging the clutch under either the first control or second control different from the first control depending on the state of the straddle-type vehicle.

Preferably, the during-starting-to-run gear change control means reengages the clutch by any one of the first control or the second control depending on a rotational speed difference between a driving member and a driven member of the clutch.

Further, preferably the first control references a table where clutch positions of the clutch are correlated with speeds of an engine mounted on the straddle-type vehicle to set the clutch position according to the engine speed.

Still further, preferably the second control references a table where rates at which a clutch position of the clutch is changed are correlated with rotational speed differences between a driving member and a driven member of the clutch to change the clutch position at a rate in accordance with the rotational speed difference between the driving member and the driven member of the clutch.

The objective is further solved by a straddle-type vehicle comprising the gear change control device according to one of the above embodiments.

For the method aspect, this objective is solved in an inventive manner by a gear change control method for a straddle-type vehicle, according to claim 7.

According to a preferred embodiment, the control method comprises a starting-to-run control step of starting the straddle-type vehicle, which has been stopping with the clutch disengaged and the transmission in gear, to run by engaging the clutch under first control, a determination step of determining whether or not a gear change command is given to the transmission while the clutch is being engaged in the starting-to-run control step; and a during-starting-to-run gear change control step of, if it is determined in the determination step that a gear change command is given while the clutch is being engaged, once disengaging the dutch, causing the transmission to change gears according to the gear change command, and then reengaging the clutch under either the first control or second control different from the first control depending on a state of the straddle-type vehicle.

In the following, the present invention is explained in greater detail with respect to several embodiments thereof in conjunction with the accompanying drawings, wherein:
- FIG. 1: is an external side view of a motorcycle according to an embodiment,
- FIG. 2: shows the hardware construction of a gear change control system according to the embodiment,
- FIG. 3: shows the construction of a group of sensors and switches,
- FIG. 4: is a transition diagram illustrating control executed when a main key is operated,
- FIG. 5: is a transition diagram illustrating normal control,
- FIG. 6: illustrates starting-to-run control,
- FIG. 7: shows a clutch position table used in the starting-to-run control,
- FIG. 8: illustrates shift up control during running,
- FIG. 9: shows a clutch position table used in the shift up control during running,
- FIG. 10: shows a clutch position change rate table used in the shift up control during running, and
- FIG. 11: illustrates shift up control during starting-to-run control.

A preferred embodiment is described in detail below with reference to the drawings.

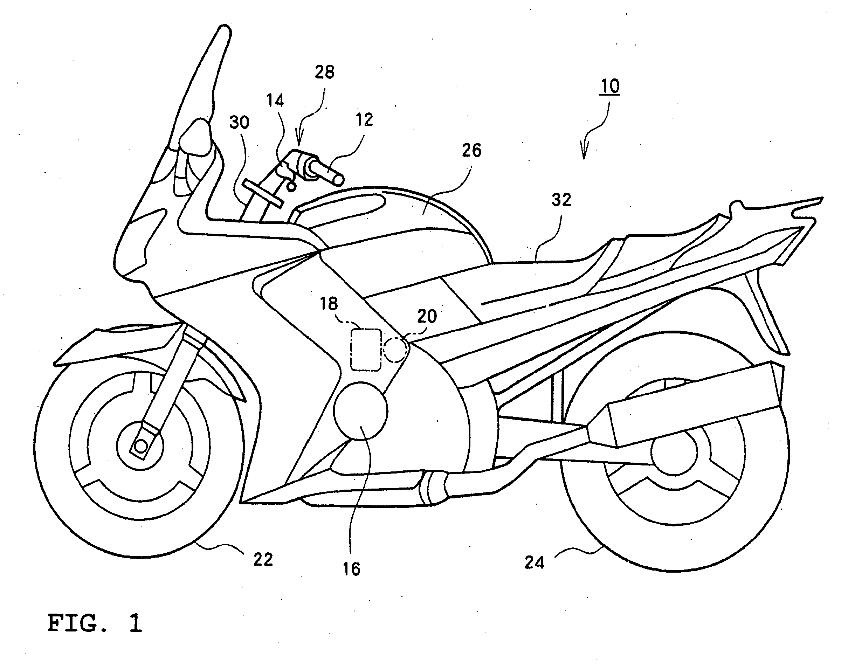

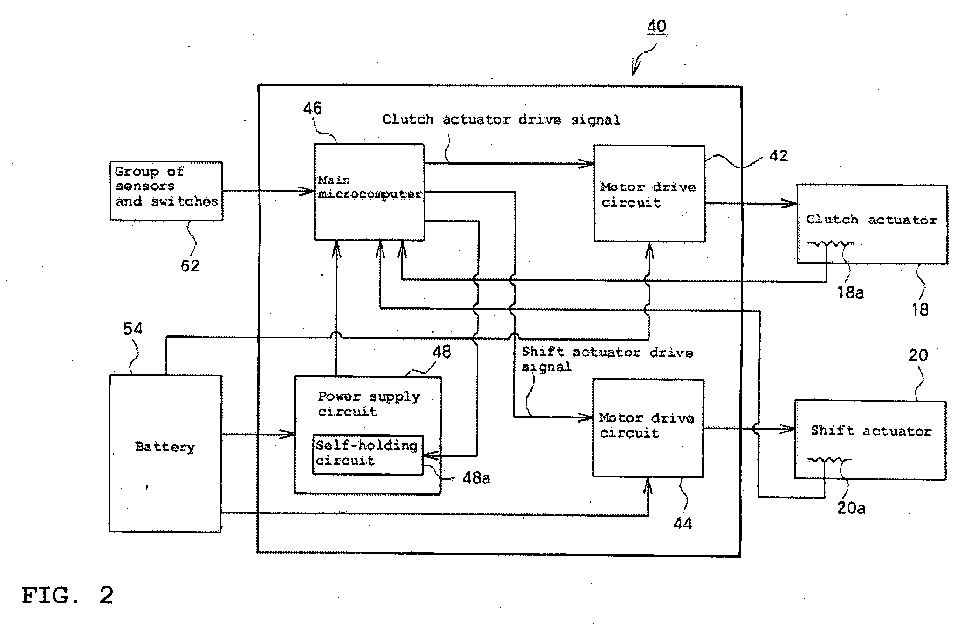

FIG. 1 is an external side view of a motorcycle according to an embodiment. A motorcycle 10 shown in the drawing is a form of the straddle-type vehicle and includes a front wheel 22 and a rear wheel 24. Handlebars 28, extending transversely with respect to the running direction of the vehicle, are attached to the top of a front fork 30 attached to the front wheel 22. A grip 12 and a clutch lever 14 are attached to an end of the handlebars 28, and an accelerator grip and a brake lever (not shown) are attached to the other end thereof. A seat 32 where a rider can straddle the motorcycle 10 is provided in an upper part of the motorcycle 10. The construction of the motorcycle 10 is generally the same as those of well known motorcycles. One characteristic is a clutch actuator 18, installed above an engine 16, that is, below a fuel tank 26, to actuate a clutch provided in a crankcase of the engine 16 by means of a motor. Another characteristic is a shift actuator 20 provided to actuate a transmission provided in a transmission case of the engine 16 by means of a motor. The operation of the clutch actuator 18 is controlled by a control device 40 (see FIG. 2) to engage and disengage the clutch. The shift actuator 20 is also controlled by the control device 40 to shift the transmission. The clutch lever 14 is connected to the clutch actuator 18 through a wire so that the clutch can also be engaged and disengaged through the clutch lever 14.

FIG. 2 shows the entire construction of a control system mounted on the motorcycle 100. A group of sensors and switches 62, the clutch actuator 18, and the shift actuator 20 are connected to the control device 10. A battery 54 is also connected to the control device 40 to supply electric power to the control device 40. The electric power is also supplied to the clutch actuator 18 and the shift actuator 20 via the control device 40. The electric power is used to operate the control device 40, as well as the clutch actuator 18 and the shift actuator 20.

The clutch actuator 18 includes a DC motor for disengaging the clutch by forward drive of the DC motor and reengaging the clutch by reverse drive, and setting the clutch position to any state between the engaged state and the disengaged state. The clutch actuator 18 is provided with a clutch potentiometer 18a, constituted with a resistor or the like, for applying a voltage indicating the state of the clutch actuator 18, or a voltage indicating the clutch position, to the control device 40. The voltage value is used by the control device 40 as clutch position information. The motorcycle 10 includes one clutch for preventing the rotational driving force of the engine 16 from not being inputted to the transmission when both starting to run and shifting the transmission.

The shift actuator 20 also includes a DC motor for shifting up by forward drive of the DC motor and shifting down by reverse drive. The shift actuator 20 is attached to a shift arm of the transmission. The DC motor rotates the shift arm in one direction by forward drive and in the opposite direction by reverse drive. The shift actuator 20 is provided with a shift potentiometer 20a, constituted with a resistor or the like, for applying a voltage indicating the state of the shift actuator 20, or a voltage indicating the rotation angle of the shift arm, to the control device 40. The voltage value is used by the control device 40 as rotation angle information. The transmission can be set to neutral and first to fifth gear positions, and may be a known dog transmission, for example.

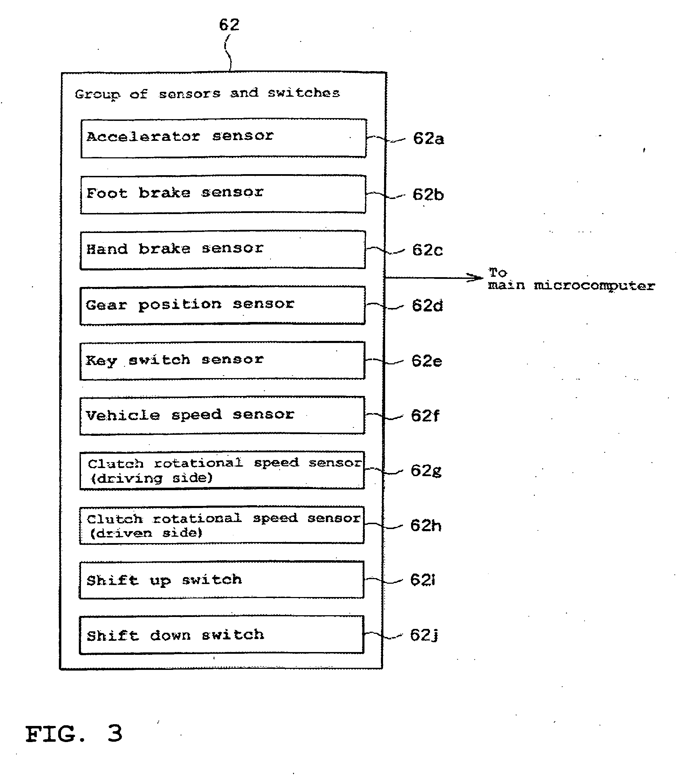

As shown in FIG. 3, the group of sensors and switches 62 include an accelerator sensor 62a, a foot brake sensor 62b, a hand brake sensor 62c, a gear position sensor 62d, a key switch sensor 62e, a vehicle speed sensor 62f, clutch rotational speed sensors 62g and 62h, a shift up switch 62i, and a shift down switch 62j. The accelerator sensor 62a detects the accelerator opening and inputs relevant data to the control device 40. The foot brake sensor 62b inputs to the control device 40 data indicating the depression angle of a rear wheel brake attached to the rear wheel 24, or whether or not the rear wheel brake is depressed. The hand brake sensor 62c inputs to the control device 40 data indicating the operation amount of a front wheel brake attached to the front wheel 22, or whether or not the front wheel brake is operated. The gear position sensor 62d is attached to the transmission and inputs to the control device 40 data indicating the current gear position (rotation amount of a shift drum). The key switch sensor 62e detects the state of a key switch (on or off, or the like) and inputs relevant data to the control device 40. The vehicle speed sensor 62f detects the vehicle speed (or equivalent information) and inputs relevant data to the control device 40. The vehicle speed sensor 62f may detect as the vehicle speed the rotational speed of a drive shaft (countershaft) of the transmission or the amount of movement of a component coupled to the drive shaft without play such as a chain, a shaft drive section, or a tire wheel. The vehicle speed sensor 62f may also obtain the vehicle speed by detecting the rotational speed of a middle shaft (idler shaft) of the transmission and multiplying the detected value by the speed reduction ratio corresponding to the current gear position of the transmission. The clutch rotational speed sensor 62g detects the rotational speed of a driving member of the clutch and inputs relevant data to the control device 40. Here, the clutch is a wet multi-plate type. The driving member of which rotational speed is detected by the clutch rotational speed sensor 62g is a friction disk, for example. The clutch rotational speed sensor 62h detects the rotational speed of a driven member (follower member) of the clutch and inputs relevant data to the control device 40. The driven member of which rotational speed is detected by the clutch rotational speed sensor 62h is a clutch disk, for example. The control device 40 computes the difference between the rotational speeds inputted from the clutch rotational speed sensors 62g and 62h and uses the computed difference as a clutch rotational speed difference to control the clutch actuator 18. Instead of the clutch rotational speed sensor 62g, a sensor for detecting the rotational speed of the engine 16 (crankshaft) or the middle shaft may be provided, in which case the rotational speed of the friction disk can be obtained by multiplying the detection results by the sensor by a predetermined speed reduction ratio. When the transmission is not in neutral, the rotational speed of the clutch disk may be obtained by dividing the rotational speed of the drive shaft or the amount of movement of a component coupled to the drive shaft without play such as a chain, a shaft drive section, or a tire wheel by the speed reduction ratio corresponding to the current gear position.

The shift up switch 62i is provided in the vicinity of the grip 12 of the handlebars 28. When the rider presses down the shift up switch 62i, a shift up command (gear change command) is inputted to the control device 40. The shift down switch 62j is also provided in the vicinity of the grip 12 of the handlebars 28. When the rider presses down the shift down switch 62j, a shift down command (gear change command) is inputted to the control device 40.

Returning to FIG. 2, the control device 40 is mainly constituted with a main microcomputer 46, and controls the operation of the clutch actuator 18 and the shift actuator 20 based on the various information indicating the state of the vehicle inputted from the group of sensors and switches 62, the clutch potentiometer 18a, and the shift potentiometer 20a.

The components of the control device 40 are described hereinafter. The control device 40 includes the main microcomputer 46, a power supply circuit 48, a motor drive circuit 42 for driving the clutch actuator 18, and a motor drive circuit 44 for driving the shift actuator 20.

The power supply circuit 48 includes a switch (not shown) which turns on in conjunction with the key switch and a self-holding circuit 48a. When the switch turns on, the power supply circuit 48 converts a voltage of a battery 54 into a driving voltage for the main microcomputer 46 and starts applying the converted voltage to the main microcomputer 46. Even after the key switch is turned off, the switch is held on by the self-holding circuit 48a. Until the main microcomputer 46 is completely shut down, the power supply circuit 48 continues applying the driving voltage. When the shutdown process is complete, the main microcomputer 46 commands the self-holding circuit 48a to stop the power supply. Then, the power supply circuit 48 stops the power supply to the main microcomputer 46.

The motor drive circuit 42 includes a known H-bridge circuit. The motor drive circuit 42 supplies a current from the battery 54 to the DC motor constituting the clutch actuator 18 to rotate the DC motor in a direction and at a rate in accordance with a clutch actuator drive signal supplied from the main microcomputer 46. The motor drive circuit 44 also includes a known H-bridge circuit. The motor drive circuit 52 supplies a current from the battery 54 to the DC motor constituting the shift actuator 20 to rotate the DC motor in a direction and at a rate in accordance with a shift actuator drive signal supplied from the main microcomputer 46.

The main microcomputer 46 is constituted with a known computer, and controls the operation of the clutch actuator 18 and the shift actuator 20 based on the various information indicating the state of the vehicle inputted from the group of sensors and switches 62, the clutch potentiometer 18a, and the shift potentiometer 20a as described above. The main microcomputer 46 executes the shutdown process after the key switch is turned off, and commands the self-holding circuit to stop the power supply when the shutdown process is finished.

Description is made in detail below of the control of the transmission and the clutch executed in the motorcycle 10 constructed as described above.

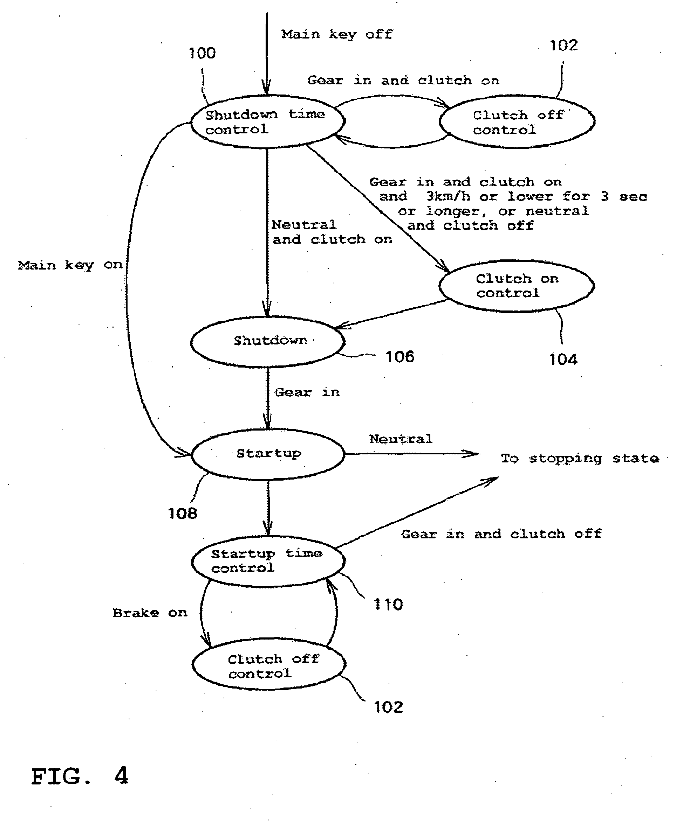

FIG. 4 is a control state transition diagram illustrating control executed when a main key is turned on and off. As shown in the drawing, the main microcomputer 46 is configured to execute a shutdown time control program 100, a clutch off control program 102, a clutch on control program 104, a shutdown program 106, a startup program 108, and a startup time control program 110. These programs are stored beforehand in a ROM (information storage medium) included in the main microcomputer 46. The shutdown time control program 100 is executed when data inputted from the key switch sensor 62e indicate that a key switch 60 has been turned off. If the gear is in and the clutch is on the clutch off control program 102 is started up. When the clutch off control program 102 makes the clutch disengage, the shutdown time control program 100 resumes its control. "The gear is in" refers to a state where the transmission of the motorcycle 10 is engaged in any gear position, or in other words an occasion where data inputted from the gear position sensor 62d indicate that the transmission is set to any of the first to fifth gear positions (other than neutral). "The clutch is on" refers to an occasion where clutch position data obtained based on the output from the clutch potentiometer 18a indicate that the clutch is engaged (the clutch is on).

If the gear is in and the clutch is off and the vehicle is stopping or if neutral and the clutch is off, the shutdown time control program 100 executes the clutch on control program 104. When the clutch off control program 104 controls the clutch to be engaged, the shutdown program 106 is subsequently executed. "The clutch is off' refers to an occasion where clutch position data obtained based on the output from the clutch potentiometer 18a indicate that the clutch is disengaged (the clutch is off). "The vehicle is stopping" refers to an occasion where vehicle speed data inputted from the vehicle speed sensor 62f continue to indicate a predetermined speed (for example, 3km per hour) or lower for a predetermined period (for example, 3 seconds) or longer. "Neutral" refers to an occasion where data inputted from the gear position sensor 62d indicate that the transmission of the motorcycle 10 is in neutral. The shutdown time control program 100 starts up the shutdown program 106 if neutral and the clutch is on. If data indicating that the key switch 60 has been turned on are inputted during the shutdown time control, the startup program 108 is executed.

The clutch off control program 102 supplies a clutch actuator drive signal of a predetermined pattern to the motor drive circuit 42 to disengage the clutch by forward rotation of the DC motor 18a of the clutch actuator 18. On the other hand, the clutch on control program 104 supplies a clutch actuator drive signal of a predetermined pattern to the motor drive circuit 42 to engage the clutch by reverse rotation of the DC motor 18b.

The shutdown program 106 stops the operation of the main microcomputer 46. Here, in particular, the shutdown program 106 supplies a command signal to stop the power supply to the self-holding circuit 48a. This will allow the power supply circuit 48 to stop the power supply to the main microcomputer 46.

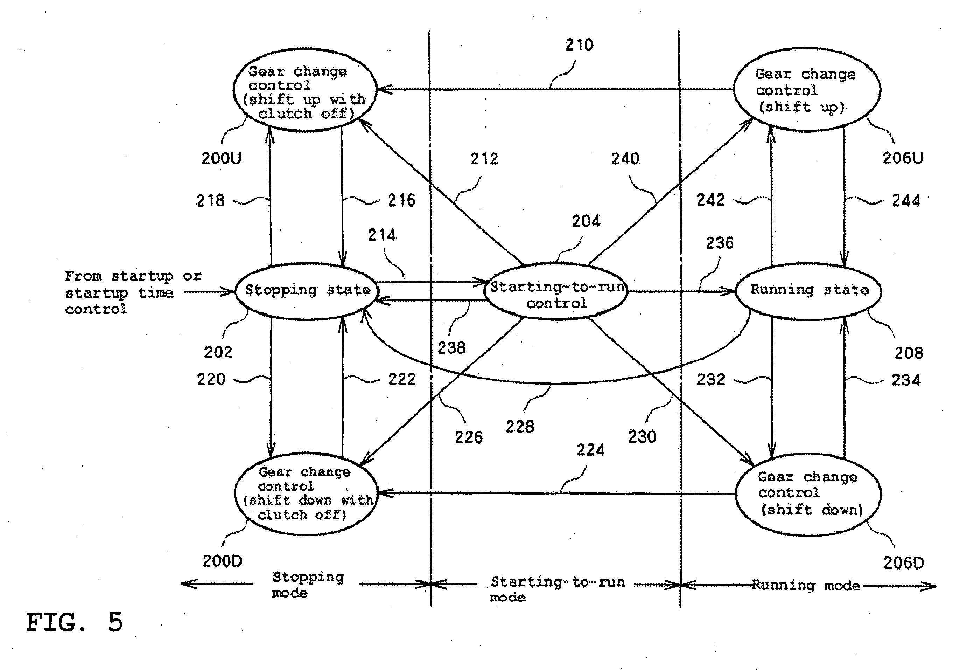

The startup program 108 is executed when a key to the motorcycle 10 is inserted into the key switch 60 and turned on (the main key is turned on) while the vehicle is stopping or while the shutdown time control program 100 is being executed. Whether or not the key is inserted into the key switch 60 and turned on is determined based on the output from the key switch sensor 62e. The startup program 108 initializes the components of the control device 40 and determines whether or not the transmission of the motorcycle 10 is in neutral. If neutral, the control proceeds to normal control (stopping state program 202 shown in FIG. 5). If the transmission of the motorcycle 10 is in gear at startup, the startup program 108 starts up the startup time control program 110. The startup time control program 110 monitors whether or not the brake is operated, and when the brake is operated (the brake in on), starts up the clutch off control program 102. When the clutch is disengaged, the startup time control program 110 resumes its control. If the gear is in and the clutch is off, the control proceeds to the normal control (stopping state program 202 shown in FIG. 5). Whether or not the brake is operated is determined based on the input from the foot brake sensor 62b and the hand brake sensor 62c. Specifically, the brake is determined to be in operation when data inputted from the foot brake sensor 62b indicate that the rear wheel brake is in operation or when data inputted from the hand brake sensor 62c indicate that the front wheel brake is in operation. Here, the brake of the motorcycle 10 is determined to be in operation when either the front wheel brake or the rear wheel brake is in operation. However, the brake of the motorcycle 10 may be determined to be in operation only when both the brakes are in operation.

FIG. 5 is a control state transition diagram illustrating the normal control of the motorcycle 10. The main microcomputer 46 executes the control shown in FIG. 5 when the main key on control shown in FIG. 2 is finished. As shown in FIG. 5, the main microcomputer 46 is configured to execute gear change control programs 200U, 200D, 206U, and 206D, the stopping state program 202, a starting-to-run control program 204, and a running state program 208. These programs are also stored beforehand in the ROM (information storage medium) included in the main microcomputer 46. The normal control of the control device 40 has a stopping mode, a starting-to-run mode, and a running mode. The stopping mode is controlled by the stopping state program 202 and the gear change control programs 200U and 200D. The starting-to-run mode is controlled by the starting-to-run control program 204. The running mode is controlled by the running state program 208 and the gear change control programs 206U and 206D.

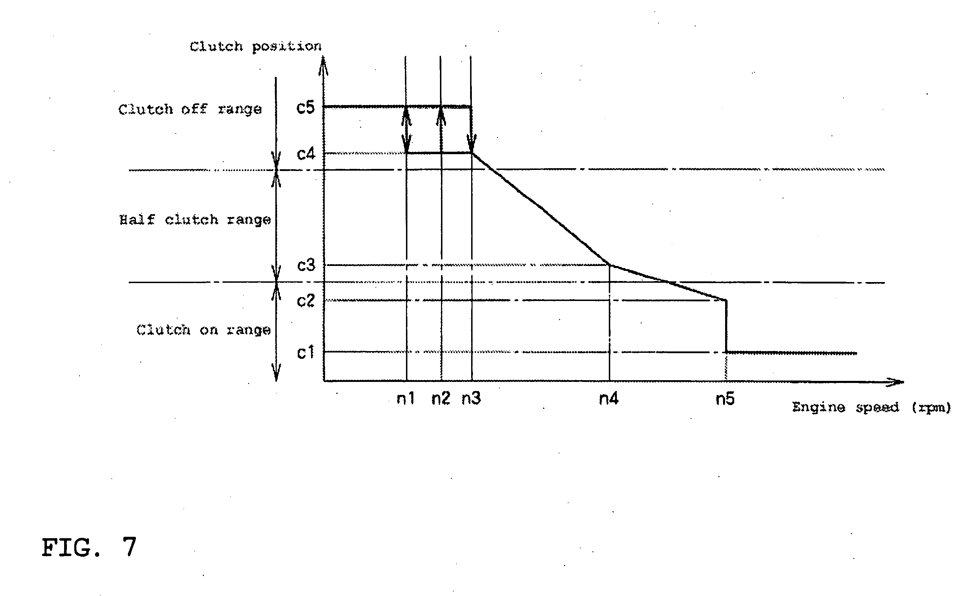

The stopping state program 202 starts to control the vehicle in response to a command from the startup program 108, the startup time control program 110, the gear change control programs 200U and 200D, and the running state program 208. The stopping state program 202 maintains the state of the transmission and the clutch. When the shift up switch 62i is determined to be pressed with the transmission set in neutral, the control immediately proceeds to the gear change control program 200U (arrow 218). When the shift down switch 62j is determined to be pressed with the transmission set in any of the first to fifth gear positions, the control immediately proceeds to the gear change control program 200D (arrow 220). If it is determined that the engine speed is a predetermined value n3 (see FIG. 7) or higher, the transmission is set in any of the first to fifth gear positions, and the vehicle state does not meet starting-to-run prohibition conditions, the control immediately proceeds to the starting-to-run control program 204 (arrow 214). The starting-to-run prohibition conditions are as follows: 1} the vehicle running speed is maintained at a predetermined speed (for example, 3km/h) or lower for a predetermined period (for example, 3 seconds) or longer with the transmission set in the third gear position or higher (the vehicle is determined to stop running with the transmission in the third gear position or higher); or 2) the temperature of the coolant of the engine 16 is at a predetermined temperature (for example, 40°C) or lower and the accelerator opening indicated by the accelerator sensor 62a is a predetermined opening or smaller (the vehicle is determined to be at first idle).

The gear change control program 200U controls to disengage (off) the clutch if the clutch is engaged (on) and shift up the transmission by one gear position. Specifically, a clutch actuator drive signal of a predetermined pattern is supplied to the motor drive circuit 42 to drive the clutch actuator 18. As a result, the clutch is disengaged. Also, a shift actuator drive signal of a predetermined pattern is supplied to the motor drive circuit 44 to drive the shift actuator 20. As a result, the transmission is shifted. When the gear change control program 200U finishes the control as described above (clutch off and shift up), the control proceeds to the stopping state program 202 (arrow 216).

In the same manner, the gear change control program 200D controls to disengage (off) the clutch if the clutch is engaged (on) and shift down the transmission by one gear position. When this control (clutch off and shift down) is finished, the control proceeds to the stopping state program 202 (arrow 222).

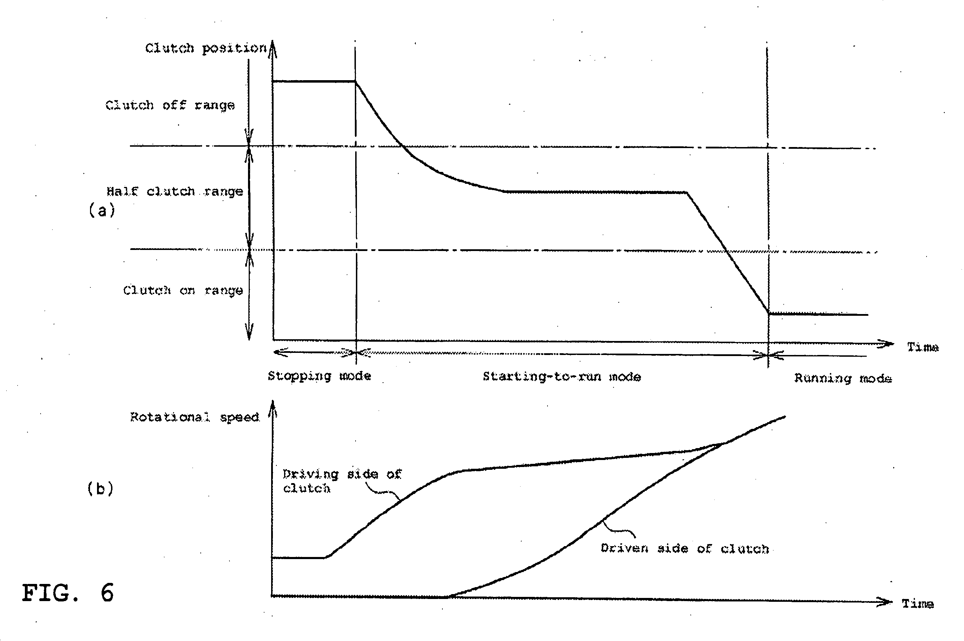

The starting-to-run control program 204 starts to control the vehicle in response to a command from the stopping state program 202. The starting-to-run control program 204 executes starting-to-run control, that is, obtains the engine speed and drives the clutch actuator 18 to attain a clutch position in accordance with the obtained engine speed. Specifically, the main microcomputer 46 references a table where clutch positions of the clutch are correlated with the engine 16 speeds (see FIGs. 6 and 7) to set the clutch position in accordance with the engine 16 speed. During the starting-to-run control, if the engine speed is determined to have fallen down to a predetermined value n' (n' ≤ n3) or lower, the control immediately proceeds to the stopping state program 202 (arrow 238). When the shift up switch 62i is pressed down during the starting-to-run control, if it is determined that the transmission is set in any of the first to fourth gear positions and the clutch rotational speed difference is a predetermined value Δn (Δn is a value at which almost no shock occurs when the clutch is engaged under second control (half clutch control in changing gear positions during the normal running)) or larger, the control immediately proceeds to the gear change control program 200U (arrow 212). When the shift down switch 62j is pressed down during the starting-to-run control, if it is determined that the transmission is set in any of the second to fifth gear positions and the clutch rotational speed difference is the predetermined value Δn or higher, the control immediately proceeds to the gear change control program 200D (arrow 226). When the shift up switch 62i is pressed down during the starting-to-run control, if it is determined that the transmission is set in any of the first to fourth gear positions and the clutch rotational speed difference is smaller than the predetermined value Δn, the control immediately proceeds to the gear change control program 206U (arrow 240). When the shift down switch 62j is pressed down during the starting-to-run control, if it is determined that the transmission is set in any of the second to fifth gear positions and the clutch rotational speed difference is smaller than the predetermined value Δn, the control immediately proceeds to the gear change control program 206D (arrow 230). If the clutch rotational speed difference has converged to a predetermined value Δn' (Δn' is a value at which almost no shock occurs when the clutch is engaged (for example, 50 rpm)) or lower during the starting-to-run control, the control immediately proceeds to the running state program 208 (arrow 236).

The running state program 208 starts to control the vehicle in response to a command from the starting-to-run control program 204 and the gear change control programs 206U and 206D. The running state program 208 maintains the state of the transmission and the clutch and rotates the engine 16 according to the accelerator opening detected by the accelerator sensor 62a to run the motorcycle 10. At this time, when the shift up switch 62i is pressed down, if it is determined that the transmission is set in any of the first to fourth gear positions and the engine speed after shifting up will be a predetermined lower limit engine speed (under-rev speed) or higher, the control immediately proceeds to the gear change control program 206U (arrow 242). When the shift down switch 62j is pressed down, if it is determined that the transmission is set in any of the second to fifth gear positions and the engine speed after shifting down will be a predetermined upper limit engine speed (over-rev speed) or lower, the control immediately proceeds to the gear change control program 206D (arrow 232). When the engine speed falls down to a predetermined value n" (n" ≤ n3) or lower with the transmission set in any of the first to fifth gear positions, the control proceeds to the stopping state program 202 (arrow 228).

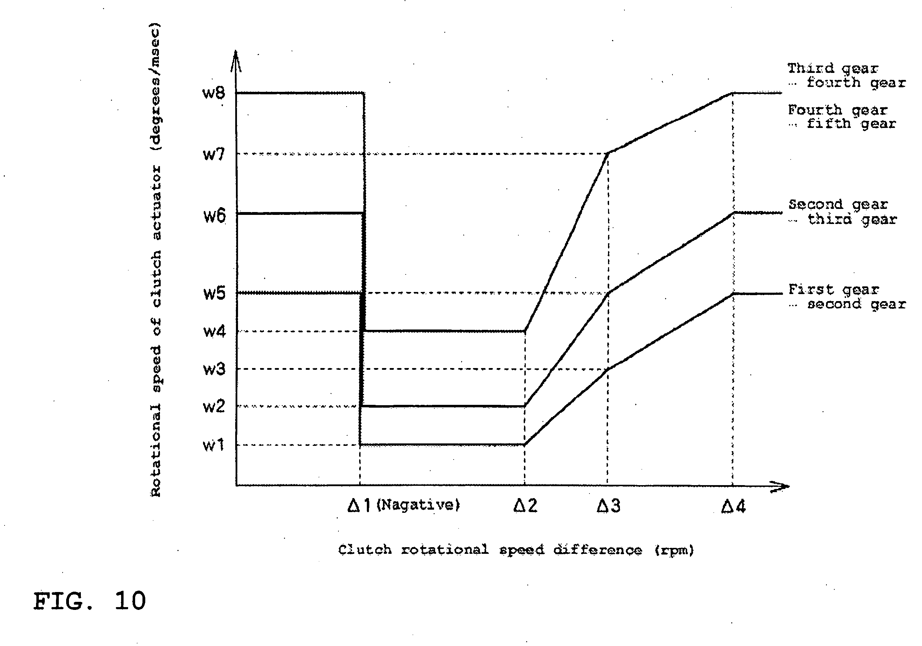

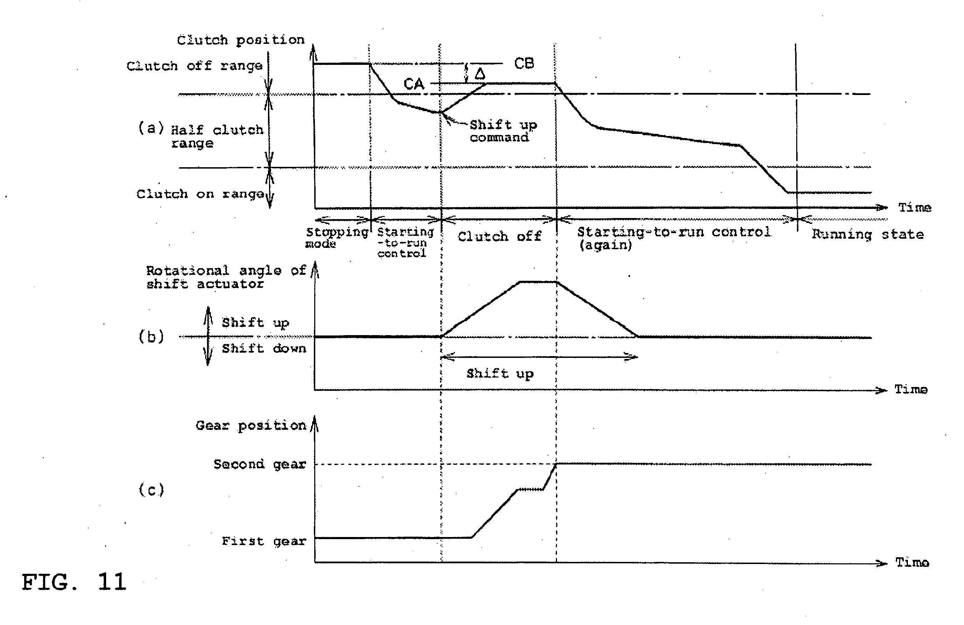

The gear change control program 206U starts to control the vehicle in response to a command from the running state program 208 and the starting-to-run control program 204. The gear change control program 206U executes shift up control, that is, drives the clutch actuator 18 to once disengage the clutch, drives the shift actuator 20 to shift up the transmission, and then drives the clutch actuator 18 to reengage the clutch. In reengaging the clutch, a table where rates at which the clutch position is changed are correlated with the rotational speed differences between the driving member and the driven member of the clutch (see FIGs. 10 and 11) is referenced to change the clutch position at a rate in accordance with the rotational speed difference between the driving member and the driven member of the clutch (the gear change control program 206D is executed in the same manner). When the shift up control is finished, the control proceeds to the running state program 208 (arrow 244). However, when the vehicle speed of the motorcycle 10 falls down to a predetermined speed or lower in particular during the shift up control, in particular, the control proceeds to the gear change control program 200U (arrow 210).

The gear change control program 206D starts to control the vehicle in response to a command from the running state program 208 or the starting-to-run control program 204. The gear change control program 206D executes shift down control, that is, drives the clutch actuator 18 to once disengage the clutch, drives the shift actuator 20 to shift down the transmission, and then drives the clutch actuator 18 to reengage the clutch. When the series of control is finished, the control proceeds to the running state program 208 (arrow 234). However, when the vehicle speed of the motorcycle 10 falls down to a predetermined speed or lower during the shift down control, in particular, the control proceeds to the gear change control program 200D (arrow 224).

The vehicle control which transits as described above can suitably control gear changes (control the transmission and the clutch) according to various running/in operation states of the motorcycle 10. Although not shown in FIG. 4 or 5, the main microcomputer 46 has a resident program for determining and dealing with an abnormality so that abnormalities of the vehicle can be properly handled.

Hereinafter, description is made of the starting-to-run control, the gear change control (shift up control) during running, and the gear change control during starting-to-run, which are characteristics of this embodiment.

First, the starting-to-run control for the motorcycle 10 is described.

FIG. 6 shows the transition of the state of the motorcycle 10 by the starting-to-run control. FIG. 6(a) shows the transition of the clutch position over time, from the beginning to the end of the starting-to-run control. FIG. 6(b) shows the transition of the rotational speeds of the driving member and the driven member of the clutch over time, from the beginning to the end of the starting-to-run control. As shown in these drawings, when the control proceeds from the stopping state program 202 to the starting-to-run control program 204 and thus the control mode proceeds from the stopping mode to the starting-to-run mode, the clutch position is controlled according to the table shown in FIG. 7. That is, the clutch position in accordance with the engine speed is obtained from the table shown in FIG. 7 at predetermined intervals, and the clutch actuator 18 is controlled to attain the obtained clutch position. When the clutch rotational speed difference converges to the predetermined value Δn' or smaller, the clutch is engaged at a constant rate.

In the table used in the starting-to-run control shown in FIG. 7, the engine speed and the clutch position are correlated (n1 < n2 < n3 < n4 < n5; c1 < c2 < c3 < c4 < c5). In the table, the engine speed lower than n1 is correlated with the clutch position c5 (the clutch completely off). The engine speed not lower than n1 but lower than n3 is correlated with the clutch positions c4 and c5. In this case, either of the clutch positions is selected according to the starting-to-run preparation start conditions and the starting-to-run cancel conditions to be described later. The clutch position c4 is set within a range where the driving force of the engine 16 is not transmitted to the rear wheel 24.

The engine speed not lower than n3 but lower than n4 is correlated to the range of the clutch positions c4 through c3; a higher engine speed is correlated to a clutch position with a smaller value (a narrower clutch position). The engine speed not lower than n4 but lower than n5 is correlated to the range of the clutch positions c3 through c2; a higher engine speed is correlated to a clutch position with a smaller value. Lastly, the engine speed higher than n5 is correlated to the clutch position c1 with the smallest value (the clutch completely on). This is for the purpose of engaging the clutch securely in the high speed range. The table shown in FIG. 7 allows the clutch position to be set to a value in accordance with the engine speed during the starting-to-run control, and thereby allows the vehicle to start to run smoothly.

Here, description is made of the starting-to-run preparation start conditions and the starting-to-run preparation cancel conditions. The starting-to-run preparation start conditions are as follows: a1} the transmission is set to a predetermined gear which permits starting to run (for example, the first gear and the second gear) and the engine speed is the predetermined value n3 (see FIG. 7) or higher; or a2) the engine speed is the predetermined value n1 (see FIG. 7) or higher and the accelerator opening is a predetermined amount or larger. When the engine speed is not lower than n1 but lower than n3, if either of the above conditions a1 or a2 is satisfied, the clutch position c4 is used. This allows the vehicle to start to run immediately. The above condition a2 requires the accelerator opening to be a predetermined amount or larger, and thus can achieve smoother control. On the other hand, the starting-to-run preparation cancel conditions are as follows: b1} the engine speed is lower than the predetermined value n2 (see FIG. 7) and the accelerator opening is smaller than a predetermined amount; or b2) the engine speed is lower than the predetermined value n1 (see FIG. 7). When the engine speed is not lower than n1 but lower than n3, if either of the above conditions b1 or b2 is satisfied, the clutch position c5 is used. Again, the above condition b1 requires the accelerator opening to be a predetermined amount or smaller, and thus can achieve smoother control.

The starting-to-run control as described above can securely and smoothly engage the clutch when the vehicle starts to run where the clutch rotational speed difference is large, by securely narrowing the distance between the clutch members as the engine speed increases.

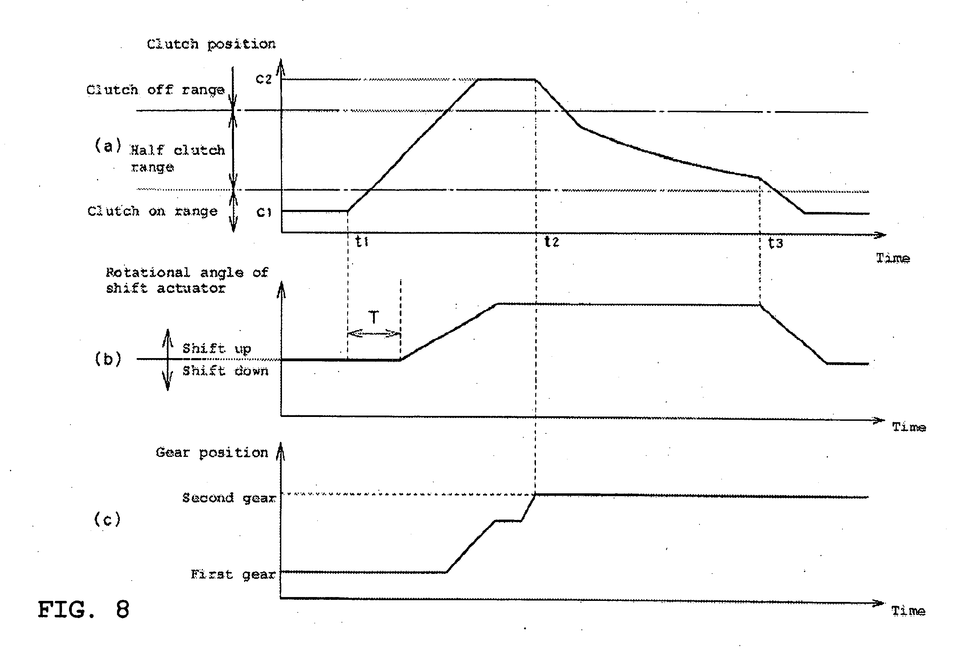

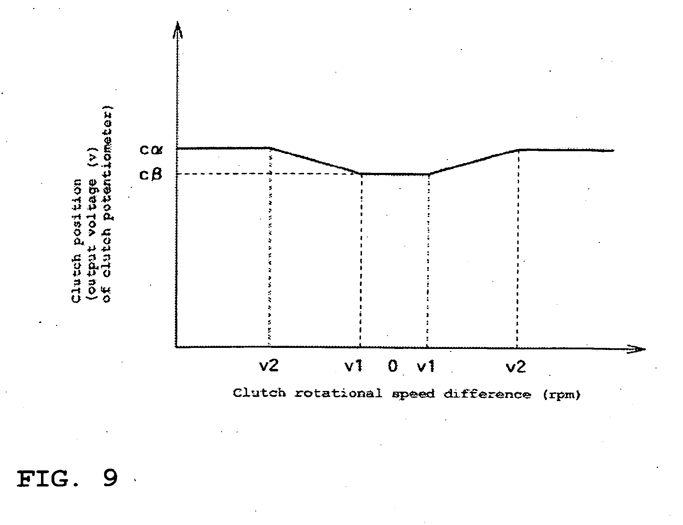

Next, description is made of the gear change control (shift up control) while the motorcycle 10 is running. As described above, this control is executed by the gear change control program 206U. FIG. 8 shows the transition of the vehicle state over time during the shift up control (from the first gear to the second gear). FIG. 8(a) shows the transition of the clutch position over time. FIG. 8(b) shows the transition of the shift actuator rotational angle (or the shift arm rotational angle) over time. FIG. 8(c) shows the transition of the gear position outputted from the gear position sensor 62d over time. As shown in these drawings, when a shift up command is given (timing t1 in the drawing), the clutch actuator 18 disengages the clutch at a constant rate. When a predetermined waiting period T elapses from the timing t1, the shift actuator 20 is driven in the shift up direction. Then, when it is detected that the intended gear position is reached (timing t2 in the drawing), half clutch control starts. That is, the clutch position is set to a value in accordance with the clutch rotational speed difference at the timing t2 (initial value) according to the table shown in FIG. 9. In the table shown in FIG. 9, the clutch rotational speed difference and the initial value of the dutch position are correlated. The gear change control program 206U monitors the timing at which the clutch position reaches the initial value obtained from this table. When the clutch position reaches the initial value (timing t3 in the drawing), then the clutch position change rate in accordance with the clutch rotational speed difference is obtained according to the table shown in FIG. 10 at predetermined intervals, and the clutch position is changed (the clutch position is narrowed) at the obtained change rate. Also, the shift actuator 20 is returned to its initial position at the timing t3.

The gear change control as described above determines the clutch position in accordance with the clutch rotational speed difference during gear changes, and thus can change gears immediately during running.

Lastly, description is made of the gear change control where a shift up is performed when the motorcycle 10 starts to run. The starting-to-run control program 204 make the motorcycle 10 start, which has been stationary with the clutch disengaged and the transmission in gear, to run by engaging the clutch under the above starting-to-run control (see FIG. 6). The starting-to-run control program 204 also determines whether or not a shift up or shift down command is given to the transmission while the clutch is half engaged. If it is determined that a shift up command is given while the clutch is being engaged, either of the following controls is performed depending on the state of the motorcycle 10: U1) the gear change control program 200U once disengages the clutch and causes the transmission to change gears according to the shift up command, and the starting-to-run control program 204 reengages the clutch (arrows 212, 216, and 214); or U2) the gear change control program 206U once disengages the clutch and causes the transmission to change gears according to the shift up command, and the clutch is reengaged under control different from the predetermined starting-to-run control described above (arrow 240).

On the other hand, if it is determined that a shift down command is given while the clutch is being engaged, either of the following controls is performed depending on the state of the motorcycle 10: D1) the gear change control program 200D once disengages the clutch and causes the transmission to change gears according to the shift down command, and the starting-to-run control program 204 reengages the clutch (arrows 226, 222, and 214); or D2) the gear change control program 206D once disengages the clutch and causes the transmission to change gears according to the shift up command, and the clutch is reengaged under control different from the predetermined starting-to-run control described above (arrow 230).

FIG. 11 shows the transition of the vehicle state over time when a shift up command is given during the starting-to-run control and the control of U1 above is executed. FIG. 11(a) shows the transition of the clutch position over time. FIG. 11(b) shows the transition of the shift actuator rotational angle (or the shift arm rotational angle) over time. FIG. 11(c) shows the transition of the gear position outputted from the gear position sensor 62d over time. As shown in these drawings, when the starting-to-run control program 204 starts the starting-to-run control and a shift up command is inputted from the shift up switch 62i during the starting-to-run control, the clutch rotational speed difference and the gear position are obtained. If it is determined that the transmission is set in any of the first to fourth gear positions and the clutch rotational speed difference is the predetermined value Δn or smaller, the control immediately proceeds to the gear change control program 200U (arrow 212).

The gear change control program 200U immediately drives the clutch actuator 18 to set the clutch to a clutch position CA which is a predetermined amount Δ displaced in the clutch engaging direction from a clutch position CB where the clutch is completely disengaged. The gear change control program 200U also drives the shift actuator 20 to cause the transmission to change gears (shift up). When the shift up is completed, the gear change control program 200U returns the shift actuator 20 to its initial position, and the control proceeds to the stopping state program 202 (arrow 216). If the stopping state program 202 determines that the engine speed is the predetermined value n3 (see FIG. 7) or higher, the transmission is set in any of the first to fifth gear positions, and the vehicle state does not meet the starting-to-run prohibition conditions, the control immediately proceeds to the starting-to-run control program 204 (arrow 214). Then, the starting-to-run control program 204 reengages the clutch using the tables of FIGs. 6 through 7.

When a shift up command is inputted during the starting-to-run control, if it is determined that the transmission is set in any of the first to fourth gear positions and the clutch rotational speed difference is smaller than the predetermined value Δn, the control proceeds from the starting-to-run control program 204 to the gear change control program 206U (arrow 240). The change gear control is executed using the tables of FIG. 8 through FIG. 10.

The gear change control system as described above executes different clutch controls depending on the clutch rotational speed difference when a gear change operation is performed using the shift up switch 62i or the shift down switch 62j during the starting-to-run control by the starting-to-run control program 204. Therefore, the system can achieve clutch engagement suitable for the vehicle state, thereby improving the riding comfort of the motorcycle 10.

The description above discloses (amongst others) an embodiment of a gear change control device for a straddle-type vehicle having a clutch and a transmission driven by respective actuators, including: starting-to-run control means for starting the straddle-type vehicle, which has been stopping with the clutch disengaged and the transmission in gear, to run by engaging the clutch under first control; determination means for determining whether or not a gear change command is given to the transmission while the clutch is being engaged by the starting-to-run control means; and during-starting-to-run gear change control means for, if the determination means determines that a gear change command is given while the clutch is being engaged, once disengaging the clutch, causing the transmission to change gears according to the gear change command, and then reengaging the clutch under either the first control or second control different from the first control depending on a state of the straddle-type vehicle.

The description further discloses an embodiment of a control method for a straddle-type vehicle having a clutch and a transmission driven by respective actuators, including: a starting-to-run control step of starting the straddle-type vehicle, which has been stopping with the clutch disengaged and the transmission in gear, to run by engaging the clutch under first control; a determination step of determining whether or not a gear change command is given to the transmission while the clutch is being engaged in the starting-to-run control step; and a during-starting-to-run gear change control step of, if it is determined in the determination step that a gear change command is given while the clutch is being engaged, once disengaging the clutch, causing the transmission to change gears according to the gear change command, and then reengaging the clutch under either the first control or second control different from the first control depending on a state of the straddle-type vehicle.

The present embodiments relate to gear change control for engaging the clutch under the first control to start the straddle-type vehicle which has been stopping to run. If a gear change command is given while the clutch is being engaged to start the straddle-type vehicle to run, or in other words before the clutch is completely engaged, the clutch is once engaged and the transmission is caused to change gears. Then, the clutch is reengaged under either the first control or the second control, depending on the vehicle state. The vehicle state may be the rotational speed difference between the driving member and the driven member of the clutch, the speed of the straddle-type vehicle, the output of a drive source provided in the straddle-type vehicle (such as engine speed), etc. According to the present invention, if a gear change command is given while starting to run, the clutch is reengaged under either the control initially used to start the vehicle to run (first control) or different control from the former, depending on the vehicle state. Therefore, the clutch can be reengaged smoothly according to the vehicle state.

The during-starting-to-run gear change control means may reengage the clutch under either the first control or the second control depending on a rotational speed difference between a driving member and a driven member of the clutch. The rotational speed difference may be measured at the timing when a gear change command is given, for example.

According to one aspect of the present embodiments, the first control references a table where clutch positions of the clutch are correlated with speeds of an engine mounted on the straddle-type vehicle to set the clutch position according to the engine speed.

According to a further aspect of the present embodiments, the second control references a table where rates at which a clutch position of the clutch are correlated with rotational speed differences between a driving member and a driven member of the clutch to change the clutch position at a rate in accordance with the rotational speed difference between the driving member and the driven member of the clutch.

The description above further discloses an embodiment of a straddle-type vehicle including any one of the gear change control device described above. The straddle-type vehicle may be motorcycles (including motorized bicycles and scooters), all-terrain straddle-type vehicles, snowmobiles, etc. The straddle-type vehicle may be driven by various drive sources such as engine, motors, and hybrids of both. Straddle-type vehicles are generally lightweight and thus can often gain enough vehicle speed while starting to run (before the clutch is completely engaged). Therefore, it is highly anticipated that gear change commands should be inputted during starting to run. The present teaching of the embodiments can appropriately respond to such gear change command inputs to suitably change transmission gears during starting to run.

The description above discloses a particularly preferred embodiment, in order to properly change transmission gears when a vehicle starts to run, which is a motorcycle including a gear change control device having a clutch and a transmission driven by respective actuators. A starting-to-run control program 204 starts the motorcycle, which has been stopping with the clutch disengaged and the transmission in gear, to run by engaging the clutch under predetermined starting-to-run control. It is determined whether or not a gear change command is given to the transmission while the clutch is being engaged. If it is determined that a shift up command is given while the clutch is being engaged, any of the following control is executed depending on the state of the motorcycle: 1) a gear change control program 200U once disengages the clutch and causes the transmission to change gears according to the shift up command, and a starting-to-run control program 204 reengages the clutch (arrows 212, 216, and 214); or 2) a gear change control program 206U once disengages the clutch and causes the transmission to change gears according to the shift up command, and the clutch is reengaged under control different from the predetermined starting-to-run control (arrow 240).

## Claims

1. Gear change control device for a straddle-type vehicle, capable of executing gear change operations, having a wet multi-plate type clutch and a transmission driven by respective actuators (18, 20), wherein a starting-to-run control program is configured to execute different clutch control strategies during a starting-to-run control of the vehicle in accordance with a rotation speed difference between a driving member and the driven member of the clutch when a gear change operation is performed, wherein a clutch position is selected according to starting-to-run preparation start conditions and starting-to-run cancel conditions, and wherein a determination means is capable of detecting that gear change command is given to the transmission while the clutch is being engaged, by the starting-to-run control means.

2. Gear change control device according to claim 1 comprising:
starting-to-run control means, which has been stopping with the clutch disengaged and the transmission in gear, to run by engaging the clutch under first control; and
during-starting-to-run gear change control means for, if the determination means determines that a gear change command is given while the clutch is being engaged, once disengaging the clutch, causing the transmission to change gears according to the gear change command, and then reengaging the clutch under either the first control or second control different from the first control depending on the state of the straddle-type vehicle.

3. Gear change control device according to claim 2, wherein the during-starting-to-run gear change control means reengages the clutch by any one of the first control or the second control depending on a rotational speed difference between a driving member and a driven member of the clutch.

4. Gear change control device according to one of the claims 1 to 3, wherein the first control references a table where clutch positions of the clutch are correlated with speeds of an engine to set the clutch position according to the engine speed.

5. Gear change control device according to one of the claims 1 to 4, wherein the second control references a table where rates at which a clutch position of the clutch is changed are correlated with rotational speed differences between the driving member and the driven member of the clutch to change the clutch position at a rate in accordance with the rotational speed difference between the driving member and the driven member of the clutch.

6. Straddle-type vehicle comprising the gear change control device according to one of claims 1 through 5.

7. Gear change control method for a straddle-type vehicle, executing different clutch controls and gear change operations, **characterized by** executing different clutch controls depending on a state of the straddle type vehicle and on a clutch rotational speed difference when a gear change operation is performed during a starting-to-run-control, wherein a clutch position is selected according to starting-to-run preparation start conditions and starting-to-run cancel conditions, and wherein it is determined that a gear change command is given to the transmission while the clutch is being engaged by the starting-to-run control means.

8. control method according to claim 7, comprising
a starting-to-run control step, which has been stopping with the clutch disengaged and the transmission in gear, to run by engaging the clutch under first control,
a determination step of determining whether or not a gear change command is given to the transmission while the clutch is being engaged in the starting-to-run control step; and
a during-starting-to-run gear change control step of, if it is determined in the determination step that a gear change command is given while the clutch is being engaged, once disengaging the clutch, causing the transmission to change gears according to the gear change command, and then reengaging the clutch under either the first control or second control different from the first control depending on a state of the straddle-type vehicle.

## Patentansprüche

1. Getriebesteuereinheit für ein Spreitzsitzfahrzeug, das dazu ausgelegt ist, Gangwechselvorgänge durchzuführen, das eine nasslaufende Lamellenkupplung und ein durch entsprechende Aktuatoren (18, 20) getriebenes Getriebe aufweist, wobei ein Anfahr-Steuerprogramm dazu ausgelegt ist, unterschiedliche Kupplungssteuerstrategien während einer Anfahrsteuerung des Fahrzeugs in Abhängigkeit eines Geschwindigkeitsunterschieds zwischen einem Antriebselement und einem angetriebenen Element auszuführen, wenn ein Gangwechselvorgang ausgeführt wird, wobei eine Kupplungsposition ausgewählt ist gemäß Anfahr-Vorbereitungs-Bedingungen und Anfahr-Abbruch-Bedingungen, und wobei ein Bestimmungsmittel dazu ausgelegt ist, das ein Gangwechselbefehl an das Getriebe gegeben ist, während die Kupplung durch die Anfahr-Steuervorrichtung eingerückt ist.

2. Getriebesteuereinheit nach Anspruch 1, aufweisend:
Anfahr-Steuervorrichtung, welche mit einer ausgerückten Kupplung und dem in Eingriff stehenden Getriebe angehalten wurde, um gemäß einer ersten Steuerung durch Einrücken der Kupplung zu laufen, und einer Anfahrts-Gangwechselsteuereinheit, um die Kupplung erst einmal auszurücken, wenn das Bestimmungsmittel bestimmt, dass ein Gangwechselbefehl gegeben ist, während die Kupplung eingerückt ist und **dadurch** dass das Getriebe veranlasst wird, Gänge zu wechseln entsprechend dem Gangwechselbefehl und dann die Kupplung wieder einzurücken entweder gemäß der ersten Steuerung oder der zweiten Steuerung, die sich von der ersten Steuerung in Abhängigkeit einer Beschaffenheit des Spritzsitzfahrzeuges unterscheidet.

3. Getriebesteuereinheit nach Anspruch 2, wobei die Anfahrts-Getriebewechselsteuereinheit die Kupplung wieder einrückt durch eine der ersten Steuerung oder der zweiten Steuerung, abhängig von einer Drehgeschwindigkeitsdifferenz zwischen dem Antriebselement und dem angetriebenen Element der Kupplung.

4. Getriebesteuereinheit nach einem der Ansprüche 1 bis 3, wobei die erste Steuerung sich auf eine Tabelle bezieht, in der Kupplungspositionen der Kupplung mit Geschwindigkeiten eines Motors verbunden sind, um die Kupplungsposition entsprechend der Motorgeschwindigkeit zu setzen.

5. Getriebesteuereinheit nach einem der Ansprüche 1 bis 4, wobei die zweite Steuerung sich auf eine Tabelle bezieht, in der Verhältnisse, bei denen eine Kupplungsposition der Kupplung gewechselt werden, mit Drehgeschwindigkeitsunterschieden in Zusammenhang stehen, die zwischen einem Antriebselement und einem angetriebenem Element der Kupplung auftreten, um die Kupplungsposition bei einem Verhältnis zu wechseln, das im Verhältnis mit der Drehgeschwindigkeitsdifferenz zwischen dem Antriebselement und dem angetriebenem Element der Kupplung steht.

6. Spreitzsitzfahrzeug, dass eine Getriebesteuereinheit nach einem der Ansprüche 1 bis 5 aufweist.

7. Gangwechselsteuerungsverfahren für ein Spreitzsitzfahrzeug, das unterschiedliche Kupplungssteuerungen und Gangwechselvorgänge ausführt, **gekennzeichnet durch** das Ausführen unterschiedlicher Kupplungssteuerungen, die abhängig von einem Zustand des Spreitzsitzfahrzeugs und einem Drehgeschwindigkeitsunterschied der Kupplung ist, wenn ein Gangwechselvorgang durchgeführt wird, während einer Anfahrts-Steuerung, wobei eine Kupplungsposition entsprechend der Anfahr-Vorbereitungsbedingung und der Anfahr-Abbruchbedingungen ausgewählt ist, und wobei festgestellt wird, dass der Gangwechselbefehl an das Getriebe übermittelt ist, während die Kupplung **durch** die Anfahrsteuervorrichtung eingerückt ist.

8. Steuerverfahren nach Anspruch 7, aufweisend einen Anfahr-Steuerschritt, der angehalten wurde mit einer ausgerückten Kupplung und einem eingerücktem Getriebe, um durch Einrücken der Kupplung gemäß einer ersten Steuerung anzulaufen, einen Bestimmungsschritt bei dem bestimmt wird, ob ein Gangwechselbefehl an das Getriebe gegeben ist oder nicht während die Kupplung durch den Anfahrsteuerschritt eingerückt ist, und einen Anfahrgangwechselsteuerschritt zum Ausrücken der Kupplung, wenn in dem Bestimmungsschritt festgestellt ist, dass der Gangwechselbefehl gegeben ist, während die Kupplung eingerückt ist, das Getriebe veranlassen, die Gänge zu wechseln gemäß dem Gangwechselbefehl, und das die Kupplung wieder Einzurücken entweder gemäß einer ersten Steuerung oder einer zweiten Steuerung, die sich von der ersten Steuerung entsprechend einen Zustand des Spreitzsitzfahrzeuges unterscheidet.

## Revendications

1. Dispositif de commande de changement de vitesse pour un véhicule du type à enfourcher, apte à effectuer des changements de vitesse, comportant un embrayage du type multidisque à huile et une transmission entraînés par des actionneurs respectifs (18, 20), étant précisé qu'un programme de commande de démarrage est conçu pour exécuter différentes stratégies de commande d'embrayage pendant la commande de démarrage du véhicule suivant une différence de vitesse de rotation entre un élément d'entraînement et l'élément entraîné de l'embrayage quand un changement de vitesse est réalisé, qu'une position de l'embrayage est sélectionnée selon des conditions de préparation de démarrage et des conditions d'annulation de démarrage, et que des moyens de détermination sont aptes à détecter que l'instruction de changement de vitesse est donnée à la transmission alors que l'embrayage est en cours d'embrayage par les moyens de commande de démarrage.

2. Dispositif de commande de changement de vitesse selon la revendication 1, comprenant :
des moyens de commande de démarrage qui sont arrêtés quand l'embrayage est désembrayé et que la transmission est en prise, pour fonctionner en embrayant l'embrayage avec une première commande ; et
des moyens de commande de changement de vitesse en cours de démarrage pour que si les moyens de détermination déterminent qu'une instruction de changement de vitesse est donnée en cours d'embrayage, une fois que l'embrayage est désembrayé la transmission change de vitesse selon l'instruction de changement de vitesse, puis réembraye l'embrayage avec soit la première commande, soit la seconde commande différente de la première, suivant l'état du véhicule du type à enfourcher.

3. Dispositif de commande de changement de vitesse selon la revendication 2, étant précisé que les moyens de commande de changement de vitesse en cours de démarrage réembrayent l'embrayage grâce à l'une quelconque des première et seconde commandes en fonction d'une différence de vitesse de rotation entre un élément d'entraînement et un élément entraîné de l'embrayage.

4. Dispositif de commande de changement de vitesse selon l'une des revendications 1 à 3, étant précisé que la première commande référence une table où les positions de l'embrayage sont corrélées avec des vitesses d'un moteur pour régler la position de l'embrayage suivant la vitesse du moteur.

5. Dispositif de commande de changement de vitesse selon l'une des revendications 1 à 4, étant précisé que la seconde commande référence une table où les vitesses auxquelles une position de l'embrayage est modifiée sont corrélées avec des différences de vitesse de rotation entre l'élément d'entraînement et l'élément entraîné de l'embrayage pour modifier la position de l'embrayage à une vitesse correspondant à la différence de vitesse de rotation entre l'élément d'entraînement et l'élément entraîné de l'embrayage.

6. Véhicule du type à enfourcher comprenant le dispositif de commande de vitesse selon l'une des revendications 1 à 5.

7. Procédé de commande de changement de vitesse pour un véhicule du type à enfourcher, exécutant différentes commandes d'embrayage et manoeuvres de changement de vitesse, **caractérisé par** l'exécution de différentes commandes d'embrayage en fonction d'un état du véhicule du type à enfourcher et d'une différence de vitesse de rotation de l'embrayage quand une manoeuvre de changement de vitesse est exécutée pendant une commande de démarrage, étant précisé qu'une position de l'embrayage est sélectionnée suivant des conditions de préparation de démarrage et des conditions d'annulation de démarrage, et qu'il est déterminé qu'une instruction de changement de vitesse est donnée à la transmission alors que l'embrayage est en cours d'embrayage par les moyens de commande de démarrage.

8. Procédé de commande selon la revendication 7, comprenant
une étape de commande de démarrage qui est arrêtée quand l'embrayage est désembrayé et que la transmission est en prise, pour fonctionner en embrayant l'embrayage avec une première commande ;
une étape de détermination qui détermine si une instruction de changement de vitesse est donnée ou non à la transmission alors que l'embrayage est en cours d'embrayage lors de l'étape de commande de démarrage ; et
une étape de commande de changement de vitesse en cours de démarrage pour que s'il est déterminé lors de l'étape de détermination qu'une instruction de changement de vitesse est donnée alors que l'embrayage est en cours d'embrayage, une fois que l'embrayage est désembrayé la transmission change de vitesse selon l'instruction de changement de vitesse, puis réembraye l'embrayage avec soit la première commande, soit la seconde commande différente de la première, suivant un état du véhicule du type à enfourcher.
